# EUROPEAN PATENT SPECIFICATION

(11) **EP 4 142 979 B1**
(45) Date of publication and mention of the grant of the patent: **28.02.2024**
(21) Application number: 21720380.1
(22) Date of filing: 27.04.2021
(51) Int. Cl.: B23P 19/00, B25B 23/04, B25B 23/06, B25B 23/10

(54) **ROTATION AUXILIARY MECHANISM AND FASTENING DEVICE**
ROTATIONSHILFSMECHANISMUS UND BEFESTIGUNGSVORRICHTUNG
MÉCANISME AUXILIAIRE DE ROTATION ET DISPOSITIF DE FIXATION

(30) Priority: 28.04.2020 CN 202020678775 U
(43) Date of publication of application: 08.03.2023
(73) Proprietor: Atlas Copco Industrial Technique AB, 105 23 Stockholm (SE)
(72) Inventor: WUESTE, Michael, 46485 Wesel (DE)
(74) Representative: Rogne, Lovisa Maria Birgitta
(86) International application number: PCT/EP2021/060910
(87) International publication number: WO 2021/219591

(56) References cited:
- WO-A1-2010/029648
- CN-A- 102 049 760
- DE-B1- 2 236 696
- DE-U1- 9 014 041
- KR-B1- 101 883 357

## Description

### TECHNICAL FIELD

The present invention relates to the technical field of mechanical parts, in particular to a rotation auxiliary mechanism according to the preamble of claim 1. Such a rotation auxiliary mechanism is known from KR101883357 B1.

### ART

Existing rotating components generally use a spring to achieve force balance. However, the rotating components are directly connected to the spring, and when the rotating components rotate or cooperate with other moving components, the rotating components and the moving components will come into contact with the spring, which, over time, will cause the spring to wear out and fail, damage the spring and reduce the spring force, leading to system failure. Other examples of known rotation auxiliary mechanism are disclosed by for example DE2236696A1, and WO2010/029648A1.

### SUMMARY OF THE INVENTION

In view of the above-mentioned problems in the prior art, the object of the present invention is to provide a rotation auxiliary mechanism, which can prevent a spring from contacting with other components while ensuring force balance, which reduces spring wear, and increases service life of the spring.

A first aspect of the present invention provides a rotation auxiliary mechanism, including:
a mounting base being movably connected with a rotary arm;
an elastic assembly arranged on both sides of the rotary arm and including an elastic member and a movable member connected to one end of the elastic member, the other end of the elastic member being fixed, an end of the movable member away from the elastic member abutting against the rotary arm, when the rotary arm oscillates, the elastic member can be compressed by the movable member to retain the rotary arm, and when an external force applied to the rotary arm is removed, the elastic member drives the rotary arm oscillating to a predetermined position to reset.

According to the invention, an inside wall of the mounting base is provided with a groove for installing the elastic assembly, the elastic assembly is accommodated in the groove, and the movable member is slidably installed in the groove.

According to the invention, one end of the rotary arm extends along its radial direction to form an abutment portion that abuts against the movable member, and the abutment portion is located in the groove.

According to the invention, one end of the groove away from the abutment portion is closed to fix the other end of the elastic member.

According to the invention, the abutment portion is inclined outward by a first angle based on the normal line of the outer wall of the rotary arm, and a closed end wall of the groove away from the one end of the abutment portion is inclined outward by a second angle based on the normal line of the outer wall of the rotary arm, wherein the first angle is greater than the second angle.

Preferred embodiments are subject matter of the dependent claims.

Preferably, the elastic assembly further includes a guiding mechanism, the other end of the elastic member is sleeved on the guiding mechanism and abuts against the guiding mechanism, the guiding rod of the guiding mechanism faces toward the movable member, and there is a gap between the guiding rod and the movable member.

Preferably, the elastic assembly further includes a fixing plate provided at an end of the guiding mechanism to fix the guiding mechanism.

Advantageously, the movable member is a bearing ball.

Preferably, a side wall of the rotary arm is recessed inward to form a notch at a position corresponding to the elastic assembly, so that there is a gap between the side wall of the rotary arm and the side wall of the elastic member.

The present invention preferably provides a fastening device including a feeding mechanism and a propulsion mechanism, the fastening device further including the above rotation auxiliary mechanism, the feeding mechanism includes the rotary arm with through holes passing through both ends thereof to form a feeding channel, the action of the propulsion mechanism can fasten a fastener to the target position after the fastener is transported to the target position through the feeding channel, and the movement of the propulsion mechanism toward the target position can push the rotary arm to oscillate.

Compare to prior art, the rotation auxiliary mechanism provided by the present invention has the following effects: by arranging the elastic assemblies on both sides of the rotary arm, the elastic member of the elastic assembly is movably connected with the rotary arm via the movable member to transmit force, the elastic force generated by the compression of the elastic member can be used to apply a retaining force to the rotary arm after the rotary arm oscillates to the predetermined position so as to keep the rotary arm in the oscillating position, and at the same time, the above elastic force can also be used to force the rotary arm to reset; and the elastic member can be moved away from the rotary arm under the elastic force, thus effectively avoiding the contact of the rotary arm with the elastic member during the oscillation of the rotary arm, preventing the elastic member from wear, and improving the service life of the elastic member and the product. In addition, in the embodiment of the present utility model, an inclined action surface is provided to transmit elastic force, so that the elastic member is away from the rotary arm when the rotary arm oscillates, avoiding contact wear between the elastic member and the rotary arm, and further improving the service life of the elastic member.

### BRIEF DESCRIPTION OF THE DRAWINGS

In figures that are not necessarily drawn to scale, the same reference signs may describe similar components in different figures. The same reference signs with suffixes or different suffixes may denote different examples of similar components. The figures generally show various embodiments by way of example rather than limitation, and are used together with the description and claims to describe the embodiments of the invention. When appropriate, the same reference signs are used in all figures to refer to the same or similar parts.
FIG. 1 is a structural schematic view of the rotation auxiliary mechanism of the present invention;
FIG. 2 is a structural schematic view of the rotation auxiliary mechanism of the embodiment of the present invention (without a side wall);
FIG. 3 is another structural schematic view of the rotation auxiliary mechanism of the present invention;
FIG. 4 is a structural schematic view of an elastic assembly of the rotation auxiliary mechanism of the embodiment of the present invention;
FIG. 5 is a partial sectional view of the rotation auxiliary mechanism in FIG. 1;
FIG. 6 is a structural schematic view of a fastening device of the embodiment of the present invention.

Reference signs:
1-mounting base, 11-mounting portion, 12-side wall, 13-groove, 131-end wall; 2-rotary arm, 21-abutment portion, 211-contact surface, 22-outer wall, 23-notch; 3-elastic assembly, 31-elastic member, 32-movable member, 33-guiding mechanism, 34-fixing plate; 10-feeding mechanism, 20-propulsion mechanism.

### DETAILED DESCRIPTION OF EMBODIMENTS

In order to make the object, technical solutions and advantages of the embodiments of the present invention clearer, the technical solutions of the embodiments of the present invention will be described clearly and completely in conjunction with the accompanying drawings of the embodiments of the present invention.

Unless otherwise defined, technical terms or scientific terms used in the present invention shall be usual meanings understood by those ordinary skilled in the art to which the present invention belongs. "First", "second" and similar words used in the present invention do not indicate any order, quantity or importance, but are only used to distinguish different components. "Include" or "comprise" and other similar words means that an element or item appearing before this word covers an element or item listed after this word and its equivalents, but does not exclude other elements or items. "Connected" or "coupled" and other similar words is not limited to physical or mechanical connection, but may include electrical connection, whether direct or indirect. "Up", "down", "left", "right", etc. are only used to indicate the relative position relationship. When the absolute position of a described object changes, the relative position relationship may also change accordingly.

In order to keep the following description of the embodiments of the present invention clear and concise, detailed descriptions of known functions and known components are omitted in the present invention.

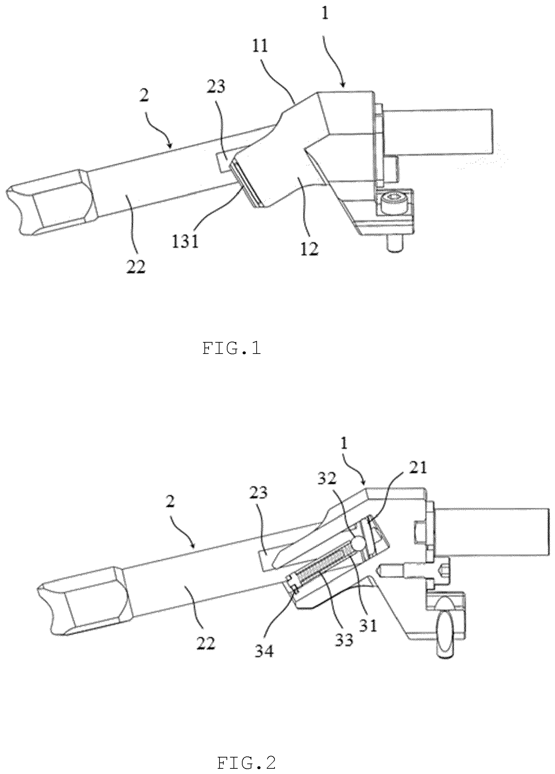

FIGS. 1-5 are structural schematic diagrams of the rotation auxiliary mechanism of the present invention. As shown in FIGS. 1-5, the present invention provides a rotation auxiliary mechanism, including:
a mounting base 1 being movably connected with a rotary arm 2;
an elastic assembly 3 arranged on both sides of the rotary arm 2 and including an elastic member 31 and a movable member 32 connected to one end of the elastic member 31, the other end of the elastic member 31 being fixed, an end of the movable member away from the elastic member 31 abutting against the rotary arm 2, when the rotary arm 2 oscillates, the elastic member 31 can be compressed by the movable member 32 to retain the rotary arm 2, and when an external force applied to the rotary arm 2 is removed, the elastic member 31 drives the rotary arm 2 oscillating to a predetermined position to reset.

When the rotary arm 2 oscillates to the predetermined position in a first direction (for example, clockwise) under the external force, the rotary arm 2 acts on the movable member 32, the movable member 32 compresses the elastic member 31 after being forced, and an elastic force generated by the elastic member 31 reacts to the rotary arm 2 via the movable member 32, such that the external force applied to the rotary arm 2 and the elastic force generated by the elastic member 31 are in a balanced state, causing the rotary arm 2 to be retained at the predetermined position; and when the external force applied to the rotary arm 2 is removed, the elastic force of the elastic member 31 is released, and the rotary arm 2 reversely oscillates and is reset by the movable member 32, so as to return to an initial position.

The above-mentioned predetermined position is the maximum oscillating position of the rotary arm 2, and at this time, the elastic member 31 has the maximum compression amount. When the swivel arm 2 oscillates to the maximum oscillating position, although the swivel arm 2 can continue oscillating, the elastic member 31 cannot provide enough retaining force for the swivel arm 2 after it continues oscillating because the compression amount of the elastic member 31 has reached the maximum, then the rotary arm 2 will oscillate in the opposite direction and return to the maximum swing position. The above-mentioned predetermined position can also be any position between the initial position and the maximum oscillating position of the rotary arm 2, and within such a oscillating range, the external force applied to the rotary arm 2 and the elastic force generated by the elastic member 31 are always in the balanced state, so that the rotary arm 2 is retained in the oscillating position.

The rotation auxiliary mechanism provided by the present invention has the following effects: by arranging the elastic assemblies 3 on both sides of the rotary arm 2, the elastic member 31 of the elastic assembly 3 is movably connected with the rotary arm 2 via the movable member 32 to transmit force, the elastic force generated by the compression of the elastic member 31 can be used to apply a retaining force to the rotary arm 2 after it oscillates to the predetermined position so as to keep the rotary arm 2 in the oscillating position, and at the same time, the above elastic force can also be used to force the rotary arm 2 to reset; and the elastic member 31 can be moved away from the rotary arm 2 under the elastic force, thus effectively avoiding the contact of the rotary arm 2 with the elastic member 31 during the oscillation of the rotary arm 2, preventing the elastic member 31 from wear, and improving the service life of the elastic member 31 and the product. That is, the elastic assembly 3 of the rotation auxiliary mechanism can not only interact with the rotary arm 2 through its end, but also can avoid contact with the rotary arm 2.

The rotary arm 2 is rotatably connected to the mounting base 1 via a hinge, and can oscillate around a central axis of the hinge under a force, wherein the central axis is the oscillating center of the rotary arm 2.

As shown in FIGS. 1-3, the mounting base 1 has a generally U-shaped profile, and includes a mounting portion 11 for mounting the rotary arm 2 as well as two side walls 12 extending perpendicular to the end surface of the mounting portion 11. The two side walls 12 are substantially parallel, which facilitates the rotation of the arm 2 on the one hand, and facilitates the installation of the elastic assembly 3 on the other hand. When the rotary arm 2 is in a stationary state (a free state without oscillation), the central axis of the rotary arm 2 is parallel to the central axis of the U-shaped profile.

An inside wall of the mounting base 1 is provided with a groove 13 for installing the elastic assembly 3. The elastic assembly 3 is accommodated in the groove 13 and the movable member 32 is slidably installed in the groove 13. The groove 13 is arranged along the length direction of the inside wall.

In a preferred embodiment, the side wall 12 of the mounting base 1 is an arc-shaped side wall and the groove 13 is an arc-shaped groove, which facilitates the movement of the elastic assembly 3 within the groove 13, reduces the contact between the elastic assembly 3 and the side wall of the groove 13, and reduces the wear of the elastic assembly 3.

The mounting part 11 and the two side walls 12 of the U-shaped structure can be integrally formed. For example, the mounting part 11 and the two side walls 12 can be formed by cutting a U-shaped opening into a circular sleeve.

The end of the rotary arm 2 close to its ocsillating center extends along its radial direction to form an abutment portion 21 that abuts against the movable member 32, and the abutment portion 21 is located in the groove 13 so that the abutment portion 21 directly abuts against the movable member 32.

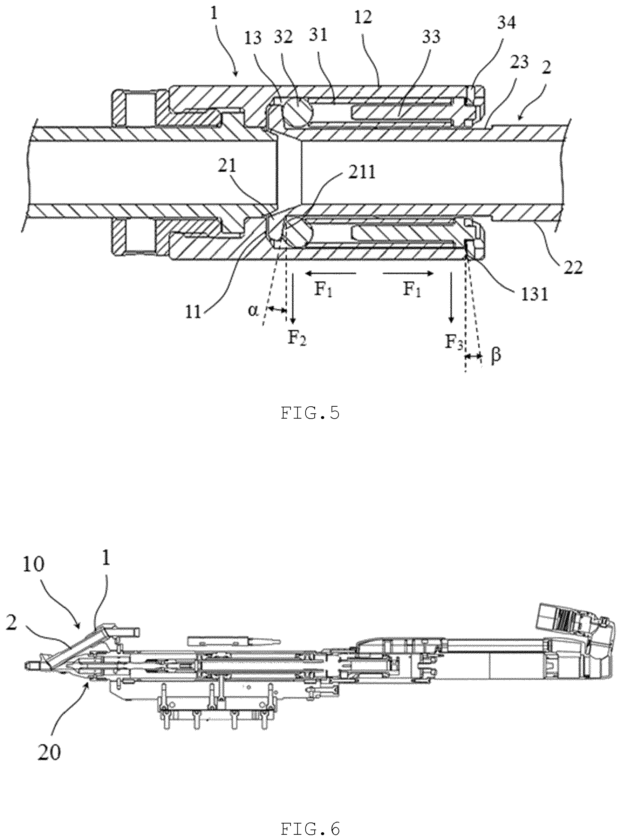

As shown in FIG. 5, the abutment portion 21 is an annular abutment part, is formed by extending outward from the outer wall 22 of the rotary arm 2 in the radial direction thereof, and is inclined outward by a first angle α based on the normal line of the outer wall 22. When the elastic force F₁ generated by the compression of the elastic member 31 acts on the movable member 32, since the abutment portion 21 has an inclined contact surface 211, the force transmitted to the abutting portion 21 through the movable member 32 has a component force F₂ toward the radially outside of the rotary arm 2, enables the elastic member 31 to be away from the movable rotary arm 2 to prevent the two from contact.

One end of the groove 13 away from the abutment portion 21 is closed to fix the other end (the end away from the movable member 32) of the elastic member 31. That is, in the groove 13, the elastic member 31, the movable member 32 and the abutting portion 21 are connected in sequence starting from the closed end wall 131, so that the elastic member 31 and the movable member 32 are restricted between the end wall 131 and the abutment portion 21. In this embodiment, the elastic member 31 abuts against the end wall 131, which enables the elastic member 31 and the end wall 131 to interact with each other while fixing the end of the elastic member 31 away from the movable member 32.

As shown in FIG. 5, the end wall 131 is inclined outward by a second angle β based on the normal line of the outer wall 22 to facilitate the transmission of force. Similar to the effect of the first angle α described above, when the elastic force F1 generated by the compression of the elastic member 31 acts on the end wall 131 in the other direction, since the end wall 131 has an inclined contact surface, the force transmitted to the end wall 131 has a component force F₃ toward the radially outside of the rotary arm 2, which enables the elastic member 31 to be away from the movable rotary arm 2.

The cooperation of the inclined abutment portion 21 and the inclined end wall 131 causes the two ends of the elastic member 31 to be away from the rotary arm 2 when the rotary arm 2 oscillates, so as to prevent the elastic member 31 from being contact wear with the rotary arm 2.

Since the abutment portion 21 is close to the oscillating center of the rotary arm 2 and the end wall 131 is far away from the oscillating center, when the rotary arm 2 oscillates, the rotary arm 2 oscillates with a larger oscillating amplitude at a position close to the end wall 131 and it is not easy to contact with the elastic member 31. Therefore, according to the invention, the first angle α is greater than the second angle β to ensure that the elastic member 31 does not contact with the outer wall 22 of the rotary arm 2 at a position close to the abutment part 21. The first angle α and the second angle β cannot be set too large, so as to prevent failing to provide sufficient radial component force for resetting the rotary arm 2. The first angle α and the second angle β are preferably 1-15°. For example, the first angle α may be 10°, and the second angle β may be 4°.

Preferably, the first angle α and the second angle β are determined according to actual condition such as the size of the elastic member 31, and is not specifically limited by the present invention.

The elastic assembly 3 may further include a guiding mechanism 33. The other end (the end away from the movable member 32) of the elastic member 31 is sleeved on the guiding mechanism 33 and abuts against the guiding mechanism 33. The guiding rod of the guiding mechanism 33 faces toward the movable member 32, and there is a certain gap between the guiding rod and the movable member 32, so that the elastic member 31 has a certain expansion space.

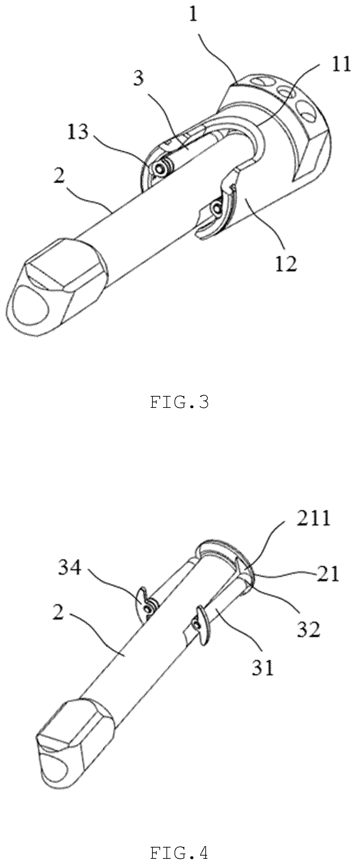

As shown in FIG. 2, the elastic member 31 may be a spring that can be sleeved on the outer circumference of the guiding mechanism 33; as shown in FIGS. 3 and 4, the elastic member 31 may also be an elastic sleeve that can be sleeved on the outer circumference of the guiding mechanism 33. Since the spring is characterized by easy deformation, large elasticity, light weight, etc, in a specific embodiment, the elastic member 31 is preferably a spring such as a coil spring or an R-shaped spring. The elastic member 31 may also be an elastic entity, which is not specifically limited by the present utility model, and the guiding mechanism 33 is inserted through the elastic entity in its axial direction.

When the elastic member 31 (such as a spring) is sleeved on the guiding mechanism 33, the elastic member 31 abuts against an end of the guiding mechanism 33 to limit the end of the elastic member 31 away from the movable member 32.

As shown in FIGS. 3-5, the elastic assembly 3 may further include a fixing plate 34 provided at an end of the guiding mechanism 33 to fix the guiding mechanism 33, thereby fixing the other end of the elastic member 31. That is, the fixing plate 34 can function to close the end wall 131 of the groove 13, and is inclined outward by the second angle β based on the normal line of the outer wall 22 of the rotary arm 2 to transmit force. By arranging the independent fixing plate 34 and the guiding mechanism 33 with an end, the elastic member 31 and the movable member 32 can be installed from the axial direction of the mounting base 1, so as to facilitate disassembly and assembly without affecting the rotary arm 2. In addition, the cooperation of the guiding mechanism 33 and the movable member 32 can ensure that the elastic member 31 does not contact with the mounting base 1, thereby further reducing the wear of the elastic member 31.

As shown in FIGS. 2, 4, and 5, the movable member 32 is a bearing ball slidably arranged in the groove 13, which can not only act on the elastic member 31, but also make rolling contact with the abutment part 21, and transmits the elastic force of the elastic member 31 to the rotary arm 2. The abutment portion 21 has a contact surface 211 that cooperates with the movable member 32, and when the bearing ball interacts with the contact surface 211 via point-to-surface contact, the bearing ball can move relative to the contact surface 211, thereby ensuring the reliability of force transmission, and only a small amount of force is required to transmit force when interacting, which helps to keep the elastic member 31 away from the rotary arm 2. In addition, the movable member 32 can ensure that the elastic member 31 remains straight and has a definite contact point.

The side wall (outer wall 22) of the rotary arm 2 is recessed inward to form a notch 23 (recess) at a position corresponding to the elastic assembly 3, so that there is a gap between the side wall of the rotary arm 2 and the side wall of the elastic member 31, thereby preventing the elastic member 31 from contacting with the rotary arm 2 when the rotary arm 2 oscillates. That is, the oscillation of the rotary arm 2 will not affect the elastic member 31, thus reducing the wear of the elastic member 31. Since the elastic assembly 3 is installed inside the mounting base 1, other components will not affect the elastic assembly 31.

It is also possible to adjust the radial size of the groove 13 extending inward from the inside wall of the mounting base 1 so that there is a gap between the side wall of the rotary arm 2 and the side wall of the elastic member 31. For example, the radial size of the elastic member 31 can be set to be smaller than that of the groove 13 to prevent the elastic member 31 from contacting with the rotary arm 2. Fig. 6 is a structural schematic diagram of the preferred fastening device of the present invention. As shown in FIG. 6, the present invention preferably also provides a fastening device, which includes a feeding mechanism 10, a propulsion mechanism 20, and the aforementioned rotation auxiliary mechanism. The feeding mechanism 10 includes a rotary arm 2 with through holes passing through both ends thereof to form a feeding channel. After a fastener is transported to the target position through the feeding channel, the action of the propulsion mechanism 20 can fasten the fastener to the target position, and the movement of the propulsion mechanism 20 toward the target position can push the rotary arm 2 to oscillating.

When the propulsion mechanism 20 advances toward the target position and pushes the rotary arm 2 to oscillate to the predetermined position, the rotary arm 2 oscillating to the predetermined position closes the feeding channel to prevent other fasteners from falling into the target position. The propulsion mechanism 20 acts on the fastener transported to the target position such that the fastener can be quickly assembled and tightened; after the fastener is tightened, the propulsion mechanism 20 retreats, so that the external force applied to the rotary arm 2 is removed, the rotary arm 2 is reset under the action of the elastic assembly 3 and return to the initial position, the feeding channel communicates with the target position to transport the next fastener to the target position and thus to facilitate the tightening and installation of the next fastener. As the wear of the elastic member 31 is reduced, the rotary arm 2 can be retained in place, which improves the reliability of the fastening device.

As shown in FIG. 6, the mounting base 1 is arranged obliquely with respect to the propulsion mechanism 20, and when the rotary arm 2 is reset, the center axis of the rotary arm 2 is parallel to the center axis of the elastic assembly 3, and the position when the rotary arm 2 is reset is the initial position of the rotary arm 2. In this way, the rotary arm 2 can be retained in a proper position so as to prevent it from contacting with the elastic assembly 3 and facilitate to a beautiful appearance.

The above embodiments are only exemplary embodiments of the present invention, and are not used to limit the present invention.

The scope of protection of the invention is defined by the claims. Those skilled in the art can make various modifications to the invention within the protection scope of the claims, and such modifications should also be regarded as falling within the protection scope of the invention.

## Claims

1. A rotation auxiliary mechanism, including:
a mounting base (1) being movably connected with a rotary arm (2);
an elastic assembly (3) arranged on both sides of the rotary arm and including an elastic member (31) and a movable member (32) connected to one end of the elastic member, the other end of the elastic member (31) being fixed, an end of the movable member (32) away from the elastic member abutting against the rotary arm, when the rotary arm oscillates, the elastic member can be compressed by the movable member to retain the rotary arm, and when an external force applied to the rotary arm is removed, the elastic member drives the rotary arm oscillating to a predetermined position to reset wherein an inside wall of the mounting base is provided with a groove (13) for installing the elastic assembly, the elastic assembly is accommodated in the groove, and the movable member is slidably installed in the groove,
wherein one end of the rotary arm extends along its radial direction to form an abutment portion (21) that abuts against the movable member (32), and the abutment portion (21) is located in the groove,
wherein one end of the groove (13) away from the abutment portion (21) is closed to fix the other end of the elastic member,
Z |B **characterized in that** the abutment portion is inclined outward by a first angle α based on the normal line of the outer wall (22) of the rotary arm, and a closed end wall (131) of the groove away from the one end of the abutment portion is inclined outward by a second angle β based on the normal line of the outer wall (22) of the rotary arm (2), and wherein α > β.

2. Rotation auxiliary mechanism according to claim 1,
wherein said mounting base (1) has a U-shaped profile to allow the rotary arm to oscillate and including a mounting portion (11) for mounting the rotary arm (2) as well as two side walls (12) extending perpendicular to the end surface of the mounting portion on a respective first and second side of said U-shaped profile,
wherein said elastic assembly (3) is arranged on both sides of the rotary arm and includes, extending on each lateral side respectively, a first and second assembly pair each comprising a respective elastic member (31) and a respective movable member (32)
and wherein a respective inside wall of each side wall of the mounting base (1) is provided with a single groove (13) for installing the respective elastic assembly pair, each elastic assembly pair is accommodated in the respective groove, and each movable member (32) is slidably installed in the respective groove.

3. The rotation auxiliary mechanism according to claim 1 or 2, **characterized in that** the elastic assembly (3) further includes a guiding mechanism (33), the other end of the elastic member is sleeved on the guiding mechanism and abuts against the guiding mechanism, the guiding rod of the guiding mechanism faces toward the movable member, and there is a gap between the guiding rod and the movable member.

4. The rotation auxiliary mechanism according to claim 3, **characterized in that** the elastic assembly (3) further includes a fixing plate (34) provided at an end of the guiding mechanism (33) to fix the guiding mechanism.

5. The rotation auxiliary mechanism according to claim 1, **characterized in that** the movable member (32) is a bearing ball.

6. The rotation auxiliary mechanism according to claim 1, **characterized in that** a side wall of the rotary arm (2) is recessed inward to form a notch (23) at a position corresponding to the elastic assembly, so that there is a gap between the side wall of the rotary arm and the side wall of the elastic member.

7. A fastening device including a feeding mechanism (10) and a propulsion mechanism (20), **characterized by** further including the rotation auxiliary mechanism according to any one of claims 1-6, the feeding mechanism includes the rotary arm with through holes passing through both ends thereof to form a feeding channel, the action of the propulsion mechanism can fasten a fastener to the target position after the fastener is transported to the target position through the feeding channel, and the movement of the propulsion mechanism toward the target position can push the rotary arm to oscillate.

## Patentansprüche

1. Drehhilfsmechanismus, einschließlich:
einer Montagebasis (1), die mit einem Dreharm (2) bewegbar verbunden ist;
einer elastischen Anordnung (3), die auf beiden Seiten des Dreharms angeordnet ist und ein elastisches Element (31) und ein bewegbares Element (32) einschließt, das mit einem Ende des elastischen Elements verbunden ist, wobei das andere Ende des elastischen Elements (31) fixiert ist, ein Ende des bewegbaren Elements (32) von dem elastischen Element weg an dem Dreharm anliegt, wenn der Dreharm schwingt, das elastische Element durch das bewegbare Element zusammengedrückt werden kann, um den Dreharm zu halten, und wenn eine externe Kraft entfernt wird, die auf den Dreharm ausgeübt wird, das elastische Element den Dreharm schwingend in eine vorbestimmte Position treibt, um zurückgesetzt zu werden, wobei eine Innenwand der Montagebasis mit einer Nut (13) zum Installieren der elastischen Anordnung versehen ist, die elastische Anordnung in der Nut aufgenommen ist, und das bewegbare Element in der Nut verschiebbar installiert ist,
wobei sich ein Ende des Dreharms entlang seiner radialen Richtung erstreckt, um einen Anlageabschnitt (21) auszubilden, der an dem bewegbaren Element (32) anliegt, und sich der Anlageabschnitt (21) in der Nut befindet,
wobei ein Ende der Nut (13) von dem Anlageabschnitt (21) weg geschlossen ist, um das andere Ende des elastischen Elements zu fixieren,
**dadurch gekennzeichnet, dass**
der Anlageabschnitt um einen ersten Winkel α basierend auf der Normalen der Außenwand (22) des Dreharms nach außen geneigt ist und eine geschlossene Endwand (131) der Nut von dem einen Ende des Anlageabschnitts weg um einen zweiten Winkel β basierend auf der Normalen der Außenwand (22) des Dreharms (2) nach außen geneigt ist, und
wobei α > β.

2. Drehhilfsmechanismus nach Anspruch 1, wobei die Montagebasis (1) ein U-förmiges Profil aufweist, um zu ermöglichen, dass der Dreharm schwingt, und einen Montageabschnitt (11) zum Montieren des Dreharms (2) sowie zwei Seitenwände (12) einschließt, die sich senkrecht zu der Endoberfläche des Montageabschnitts auf einer jeweiligen ersten und zweiten Seite des U-förmigen Profils erstrecken,
wobei die elastische Anordnung (3) auf beiden Seiten des Dreharms angeordnet ist und, sich jeweils auf jeder Seite erstreckend, ein erstes und zweites Montagepaar einschließt, umfassend je ein elastisches Element (31) und ein jeweiliges bewegbares Element (32)
und wobei eine jeweilige Innenwand jeder Seitenwand der Montagebasis (1) mit einer einzelnen Nut (13) zum Installieren des jeweiligen Paars von elastischen Anordnungen versehen ist, wobei jedes Paar von elastischen Anordnungen in der jeweiligen Nut aufgenommen ist und jedes bewegbare Element (32) in der jeweiligen Nut verschiebbar installiert ist.

3. Drehhilfsmechanismus nach Anspruch 1 oder 2,
**dadurch gekennzeichnet, dass** die elastische Anordnung (3) ferner einen Führungsmechanismus (33) einschließt, das andere Ende des elastischen Elements auf dem Führungsmechanismus ummantelt ist und an dem Führungsmechanismus anliegt, die Führungsstange des Führungsmechanismus dem bewegbaren Element zugewandt ist und ein Spalt zwischen der Führungsstange und dem bewegbaren Element besteht.

4. Drehhilfsmechanismus nach Anspruch 3,
**dadurch gekennzeichnet, dass** die elastische Anordnung (3) ferner eine Fixierplatte (34) einschließt, die an einem Ende des Führungsmechanismus (33) bereitgestellt ist, um den Führungsmechanismus zu fixieren.

5. Drehhilfsmechanismus nach Anspruch 1, **dadurch gekennzeichnet, dass** das bewegbare Element (32) eine Lagerkugel ist.

6. Drehhilfsmechanismus nach Anspruch 1, **dadurch gekennzeichnet, dass** eine Seitenwand des Dreharms (2) nach innen vertieft ist, um eine Kerbe (23) an einer Position auszubilden, die der elastischen Anordnung entspricht, sodass ein Spalt zwischen der Seitenwand des Dreharms und der Seitenwand des elastischen Elements besteht.

7. Befestigungsvorrichtung einschließlich eines Zuführmechanismus (10) und eines Antriebsmechanismus (20), **dadurch gekennzeichnet, dass** sie ferner den Drehhilfsmechanismus nach einem der Ansprüche 1 bis 6 umfasst, wobei der Zuführmechanismus den Dreharm mit Durchgangslöchern aufweist, die durch beide Enden davon verlaufen, um einen Zuführkanal auszubilden, wobei die Wirkung des Antriebsmechanismus ein Befestigungsmittel an der Zielposition befestigen kann, nachdem das Befestigungsmittel durch den Zuführkanal in die Zielposition transportiert wird, und die Bewegung des Antriebsmechanismus in Richtung der Zielposition den Dreharm drängen kann, zu schwingen.

## Revendications

1. Mécanisme auxiliaire de rotation, comportant :
une base de montage (1) étant reliée de manière mobile à un bras rotatif (2) ;
un ensemble élastique (3) agencé sur les deux côtés du bras rotatif et comportant un élément élastique (31) et un élément mobile (32) relié à une extrémité de l'élément élastique, l'autre extrémité de l'élément élastique (31) étant fixe, une extrémité de l'élément mobile (32) à l'écart de l'élément élastique venant en butée contre le bras rotatif, lorsque le bras rotatif oscille, l'élément élastique peut être comprimé par l'élément mobile pour retenir le bras rotatif et, lorsqu'une force externe appliquée au bras rotatif est supprimée, l'élément élastique entraîne le bras rotatif oscillant à une position prédéterminée pour le réinitialiser, dans lequel une paroi intérieure de la base de montage est pourvue d'une rainure (13) permettant d'installer l'ensemble élastique, l'ensemble élastique est logé dans la rainure, et l'élément mobile est installé de manière coulissante dans la rainure,
dans lequel une extrémité du bras rotatif s'étend le long de sa direction radiale pour former une partie de butée (21) qui vient en butée contre l'élément mobile (32), et la partie de butée (21) est située dans la rainure,
dans lequel une extrémité de la rainure (13) à l'écart de la partie de butée (21) est fermée pour fixer l'autre extrémité de l'élément élastique,
**caractérisé en ce que**
la partie de butée est inclinée vers l'extérieur d'un premier angle α, sur la base de la ligne normale de la paroi externe (22) du bras rotatif, et une paroi d'extrémité fermée (131) de la rainure à l'écart de l'extrémité de la partie de butée est inclinée vers l'extérieur d'un second angle β sur la base de la ligne normale de la paroi externe (22) du bras rotatif (2), et
dans lequel α > β.

2. Mécanisme auxiliaire de rotation selon la revendication 1, dans lequel ladite base de montage (1) a un profil en forme de U pour permettre l'oscillation du bras rotatif et comporte une partie de montage (11) permettant de monter le bras rotatif (2) ainsi que deux parois latérales (12) s'étendant perpendiculairement à la surface d'extrémité de la partie de montage sur un premier et un second côté respectifs dudit profil en forme de U,
dans lequel ledit ensemble élastique (3) est agencé sur les deux côtés du bras rotatif et comporte, s'étendant sur chaque côté latéral respectivement, une première et une seconde paire d'ensembles comprenant chacune un élément élastique (31) respectif et un élément mobile (32) respectif
et dans lequel une paroi intérieure respective de chaque paroi latérale de la base de montage (1) est pourvue d'une rainure unique (13) permettant d'installer la paire d'ensembles élastiques respective, chaque paire d'ensembles élastiques est logée dans la rainure respective, et chaque élément mobile (32) est installé de manière coulissante dans la rainure respective.

3. Mécanisme auxiliaire de rotation selon la revendication 1 ou 2,
**caractérisé en ce que** l'ensemble élastique (3) comporte en outre un mécanisme de guidage (33), l'autre extrémité de l'élément élastique est emmanchée sur le mécanisme de guidage et vient en butée contre le mécanisme de guidage, la tige de guidage du mécanisme de guidage fait face à l'élément mobile, et il y a un espace entre la tige de guidage et l'élément mobile.

4. Mécanisme auxiliaire de rotation selon la revendication 3,
**caractérisé en ce que** l'ensemble élastique (3) comporte en outre une plaque de fixation (34) prévue à une extrémité du mécanisme de guidage (33) pour fixer le mécanisme de guidage.

5. Mécanisme auxiliaire de rotation selon la revendication 1,
**caractérisé en ce que** l'élément mobile (32) est un roulement à billes.

6. Mécanisme auxiliaire de rotation selon la revendication 1,
**caractérisé en ce qu'**une paroi latérale du bras rotatif (2) est évidée vers l'intérieur pour former une encoche (23) à une position correspondant à l'ensemble élastique, en sorte qu'il y a un espace entre la paroi latérale du bras rotatif et la paroi latérale de l'élément élastique.

7. Dispositif de fixation comprenant un mécanisme d'alimentation (10) et un mécanisme de propulsion (20), **caractérisé en ce qu'**il comporte en outre le mécanisme auxiliaire de rotation selon l'une quelconque des revendications 1 à 6, le mécanisme d'alimentation comportant le bras rotatif avec des trous traversants passant à travers les deux extrémités de celui-ci pour former un canal d'alimentation, l'action du mécanisme de propulsion pouvant fixer un élément de fixation à la position cible après que l'élément de fixation est transporté vers la position cible à travers le canal d'alimentation, et le mouvement du mécanisme de propulsion vers la position cible pouvant pousser le bras rotatif à osciller.
